Europäisches Patentamt

European Patent Office

Office européen des brevets

(11) Veröffentlichungsnummer: **0 038 419**
**B1**

(12) # EUROPÄISCHE PATENTSCHRIFT

(45) Veröffentlichungstag der Patentschrift:
15.02.84

(51) Int. Cl.³: **H 01 F 10/26**

(21) Anmeldenummer: **81101821.7**

(22) Anmeldetag: **12.03.81**

(54) **Mehrschichtige magnetische Dünnfilmplatte mit Kunstharzschicht sowie Verfahren zur Herstellung derselben.**

(30) Priorität: **17.04.80 DE 3014718**

(43) Veröffentlichungstag der Anmeldung:
**28.10.81 Patentblatt 81/43**

(45) Bekanntmachung des Hinweises auf die Patenterteilung:
**15.02.84 Patentblatt 84/7**

(84) Benannte Vertragsstaaten:
**DE FR GB IT**

(56) Entgegenhaltungen:
**FR - A - 2 289 022**
**FR - A - 2 335 906**

(73) Patentinhaber: **International Business Machines Corporation, Old Orchard Road, Armonk, N.Y. 10504 (US)**

(72) Erfinder: **Kienle, Helmut, Taunusstrasse 54, D-7030 Böblingen (DE)**
Erfinder: **Schmid, Gerhard E. Dr., Lindachweg 18, D-7022 Leinfelden-Echterdingen 3 (DE)**
Erfinder: **Steiner, Werner, Zeisigweg 17/1, D-7030 Böblingen (DE)**
Erfinder: **Trippel, Gerhard, Dr., Steinenbronner Strasse 15, D-7032 Sindelfingen (DE)**

(74) Vertreter: **Oechssler, Dietrich Dr. rer. nat. et al, Schönaicher Strasse 220, D-7030 Böblingen (DE)**

Mehrschichtige magnetische Dünnfilmplatte mit Kunstharzschicht sowie Verfahren zur Herstellung derselben

Die Erfindung betrifft eine mehrschichtige magnetische Dünnfilmplatte mit Kunstharzschicht gemäss dem Oberbegriff des Anspruchs 1 sowie ein Verfahren zur Herstellung derselben.

Aus der DE-A-25 56 755 ist eine mehrschichtige magnetische Dünnfilmplatte bekannt, deren Substrat bzw. Träger aus einer Aluminium enthaltenden Legierung, nämlich Aluminium-Magnesium-Legierung AlMg₅, besteht. Auf dieses Substrat ist eine dünne Kunstharzschicht aufgebracht, auf der wiederum eine dünne Metallschicht und danach die Magnetaufzeichnungsschicht aufgebracht ist. Es hat sich nun bei sehr vielen Versuchen herausgestellt, dass es sich nicht erreichen lässt, dass die Kunstharzschicht porenfrei geschlossen ist. Dadurch entsteht zwischen der oder den auf der Kunstharzschicht aufgebrachten Metallschicht(en) und dem Aluminium enthaltenden Träger aufgrund der elektrischen Spannungsreihe bei korrosiver Atmosphäre, wie sie meist vorzufinden ist, Galvanokorrosion. Aufgrund dieser Galvanokorrosion zwischen dem Aluminium und den metallischen Dünnfilmmaterialien an den Poren der Filme entstehen dort Ausblühungen, sog. Blisters. Wegen der Poren in der Kunststoffschicht enthält auch die darüber aufgebrachte Metallschicht bzw. die mehreren Metallschichten und die magnetische Aufzeichnungsschicht Unterbrechungen, die für das einwandfreie Aufzeichnen von Daten nachteilig und nicht tolerierbar sind. Die Blisters führen darüber hinaus dazu, dass es weitere Schmutzeffekte nachteiliger Art gibt. Die Aufgabe vorliegender Erfindung besteht nun bei einer Dünnfilmplatte der Art gemäss dem Oberbegriff des Anspruchs 1 darin, diese so auszugestalten, dass die in der Kunststoffschicht vorhandenen Poren zu keinem nachteiligen Einfluss auf die Magnetschicht führen und somit ein im Kern porenfreies Substrat für die Aufbringung der metallischen magnetischen Dünnschichten bereitzustellen. Eine weitere Aufgabe besteht darin, ein zur Herstellung einer solchen Magnetplatte geeignetes Verfahren anzugeben.

Diese Aufgabe wird erfindungsgemäss zum einen durch die Anwendung des im kennzeichnenden Teil des Anspruchs 1 genannten Merkmals, nämlich dadurch, dass die Poren in der Kunstharzschicht durch an ihrem Boden angeordnetes Aluminiumoxid passiviert sind, gelöst und zum anderen durch die im ersten Verfahrensanspruch kennzeichnend genannten Merkmale gelöst.

Dadurch, dass die Poren der Kunstharzschicht durch darin befindliches Aluminiumoxid passiviert sind, ist sichergestellt, dass keine Galvanokorrosion zwischen den metallischen Dünnfilmschichten und dem Aluminium des Trägersubstrats auftreten kann.

Durch das Herstellungsverfahren wird in einfacher und zweckmässiger Weise, die insgesamt nicht besonders aufwendig ist, für die Bildung des Aluminiumoxids in den vorhandenen Poren an den Stellen gesorgt, an denen man es braucht. Die Oxydierung des Aluminiums, welches im Träger enthalten ist, erfolgt genau dort, wo der Elektrolyt Kontakt mit dem Aluminium enthaltenden Träger hat.

Durch die erfindungsgemässe Anordnung und das Verfahren zur Herstellung wird eine Unterlage für die Aufbringung von Dünnfilmmaterialien für die Herstellung von magnetischen Dünnfilmplatten geschaffen, die auf einfache Weise eine im Kern porenfreie Unterlage für die magnetische Aufzeichnungsschicht bildet.

Die Erfindung wird nachfolgend anhand des in den Figuren dargestellten Ausführungsbeispieles näher erläutert. Die Figuren zeigen im einzelnen:

Fig. 1 schematisch im Schnitt einen Ausschnitt aus einer Magnetplatte, die teilweise passivierte und teilweise nichtpassivierte Poren enthält;

Fig. 2 die Spannung des Elektrolysebades bei konstanter Stromdichte, einmal für unbeschichtetes AlMg₅ und einmal für kunstharzbeschichtetes Trägermaterial, jeweils in Abhängigkeit von der Zeitdauer.

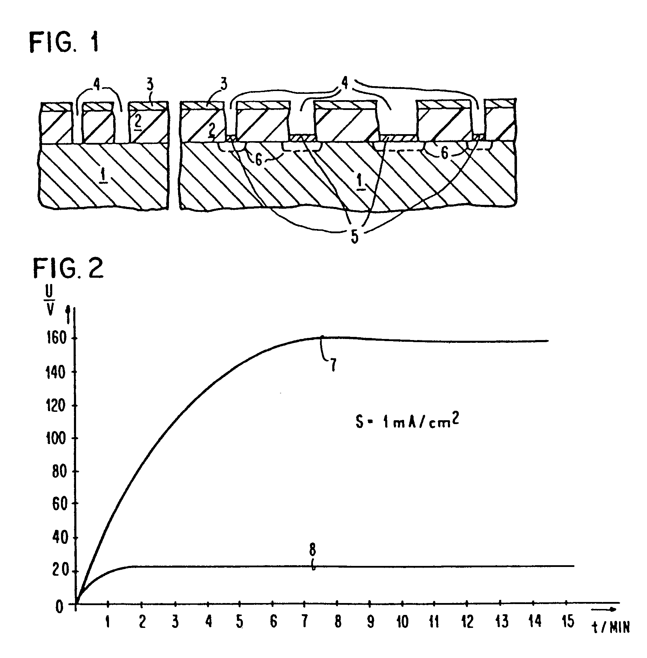

Fig. 1 zeigt in der linken Hälfte einen mit 1 bezeichneten Träger, der eine Aluminium enthaltende Legierung, wie z.B. die mit AlMg₅ üblicherweise verwendete Aluminium-Magnesium-Legierung sein kann. Auf diesem Träger oder Substrat ist eine mit 2 bezeichnete Kunstharzschicht, beispielsweise eine Epoxidharzschicht aufgebracht. Diese Schicht 2 wiederum ist mit einer oder mehreren Metallschichten 3 bedeckt, die in Dünnfilmtechnik ausgebildet sind und auch den magnetischen Aufzeichnungsträger bzw. die magnetische Aufzeichnungsschicht enthalten kann. In der Epoxidharzschicht 2 sind Poren 4 vorhanden, durch die bei der Aufbringung der Schicht 3 diese an den Stellen der Poren 4 ebenfalls unterbrochen ist. Das Problem besteht nun darin, dass in korrosiven Atmosphären, die im allgemeinen überall herrschen, zwischen den Metallen der Schicht 3 und dem Aluminium des Trägers 1 durch die Poren 4 hindurch, Galvanokorrosion entsteht. Diese ist dadurch zu erklären, dass aufgrund des grossen Abstandes in der Spannungsreihe ein starkes elektrochemisches Potential zwischen diesen Metallen der Schicht 3 und dem Aluminium des Trägers 1 besteht. Es entstehen neben den Öffnungen in den Poren, die an sich schon nachteilig sind, darüber hinaus die Probleme, dass es Ausblühungen in den Poren 4 gibt, die nicht tolerierbar sind.

Fig. 1 zeigt in der rechten Hälfte im Prinzip dasselbe Bild wie in der linken Hälfte mit einem Träger 1, ebenfalls beispielsweise AlMg₅ mit einer Kunststoffschicht 2 und einer mit 3 bezeichneten metallischen Schicht, die aus mehreren metallischen Schichten mit oder ohne den magnetischen Träger aufgebaut sein kann. Auch hier sind wiederum Poren 4 in der Kunststoffschicht 2 vorhanden. Am Boden der Poren 4 ist schraffiert eingezeichnet und mit 5 gekennzeichnet, Aluminiumoxid angeordnet. Dieses Aluminiumoxid sammelt sich auch, was durch die gestrichelten Linien 6 angedeutet ist, in der Umgebung der Poren 4 innerhalb des Aluminium enthaltenden Substrats 1 an.

Das mit 5 bezeichnete Aluminiumoxid in den Poren 4 isoliert elektrisch den Träger 1 von der umgebenden Atmosphäre und somit kann keine Galvanokorrosion zwischen der Schicht 3 oder Teilen derselben und dem darunter befindlichen Träger 1 durch die Poren 4 hindurch, mehr erfolgen.

Das erfindungsgemässe Verfahren zum Anbringen des Aluminiumoxids 5 in den Poren 4 zur Passivierung und zur elektrischen Isolierung des Substrats 1 sieht vor, dass der mit der Schicht 2 versehene Träger 1 in ein Elektrolysebad gebracht und anodisch oxidiert wird. Dabei bildet sich genau dort die gewünschte Oxidschicht, wo der Elektrolyt elektrischen Kontakt mit dem Aluminium des Trägers 1 hat.

Wie aus der Fig. 2 zu entnehmen ist, besteht jedoch das Problem darin, dass die Spannungen, die zur Bildung des Oxids nötig sind, im allgemeinen bei Aluminium zwischen 80 und ca. 150 Volt liegen. Die Kurve 7 in dem Diagramm gilt für das Material $AlMg_5$ und zeigt, dass nach einer Badzeit von etwa 8 bis 10 Minuten die Passivierungsspannung von etwa 150 Volt erreicht ist, wenn die Stromdichte S konstant bei einem Wert von $1 \, mA/cm^2$ gehalten wird. Es stellt sich also nach einer gewissen Zeit im Elektrolysebad bei konstanter Stromdichte S eine konstante Spannung ein. Damit ist dann zu erkennen, dass der den Widerstand ändernde Oxidierungsvorgang abgeschlossen ist, d.h. eine weitere Widerstandserhöhung gibt es nicht.

Das wesentliche Problem, das sich hier auftut, besteht nun darin, dass bei einer Epoxidharzschichtdicke von üblicherweise 1 μm dem eine elektrische Feldstärke von etwa $10^5$ bis $10^6$ V/cm entspricht. Diese Feldstärke liegt weit über der Durchschlagsfestigkeit des Kunststoffmaterials. Trotz dieser Probleme sind der Erfindung entsprechende Versuche durchgeführt worden. Die in Fig. 2 dargestellte Kurve 8 gilt für mit Epoxidharz beschichtetes Trägermaterial, nämlich $AlMg_5$. Wie die Kurve zeigt, wird bereits nach relativ kurzer Zeit eine Passivierungsspannung von ca. 20 Volt erreicht. Nach den üblichen Erwartungen, dass für die Oxydierung von $AlMg_5$, wie es Kurve 7 zeigt, Spannungen von ca. 80 bis 150 Volt nötig sind, um Aluminium durch anodische Bildung von Aluminiumoxid zu passivieren, muss erwartet werden, dass bei der niedrigen Spannung kein anodisches Oxid an den Poren einer ca. 1 μm dicken Epoxidharzschicht aufzuwachsen ist. Trotz dieser Prognose wurden mit Kunstharz beschichtete $AlMg_5$-Substrate einer Anodisierung gemäss der Kurve 8 in Fig. 2 unterworfen. Anschliessende Korrosionstests zeigten, dass in überraschender Weise eine wesentlich verbesserte Korrosionsresistenz bei den so behandelten Proben festzustellen ist. Weshalb und warum trotz der an sich negativen Erwartungen aufgrund der Kurve 8 in Fig. 2 eine Bildung von Aluminiumoxid innerhalb der Poren 4 (vgl. Fig. 1) möglich ist, ist noch ungeklärt. Bei den Versuchen, die gemäss Kurve 8 in Fig. 2 gefahren wurden, sind sog. partikulare Magnetplatten verwendet worden, und zwar insbesondere solche, die man üblicherweise als Ausschuss bezeichnet, da sie zu viele Poren in der Kunststoffschicht 2 haben. Dabei ist in der Kunststoffschicht 2 neben dem Kunststoff auch das magnetische Material, beispielsweise $\gamma Fe_2O_3$-Partikel enthalten. Durch die anodische Oxydation und Bildung der Aluminiumoxid-Passivierungsschichten 5 innerhalb der Poren 4 sind diese Platten dann besonders geeignet als Rohling für die Herstellung von magnetischen Dünnfilmplatten verwendet zu werden.

Bei der anodischen Oxydation bei dem erfindungsgemässen Verfahren werden an den mit der Kunstharzschicht 2 versehenen Träger 1 im Elektrolysebad Spannungen angelegt, die erheblich über der Durchschlagsspannung der Kunstharzschicht 2 liegen. Die Einwirkdauer des Elektrolysebades liegt zwischen 2 und 20 Minuten, vorzugsweise bei ca. 10 Minuten, die Temperatur des Elektrolysebades im Bereich von 20 bis 80° C, vorzugsweise jedoch bei 20 bis 30° C. Das Elektrolysebad enthält übliche Substanzen, wie insbesondere Ammonium-Pentaborat und Oxalsäure sowie auch Borsäure oder Weinsäure. Die Dicke der Aluminiumoxidschicht 5 innerhalb der Poren 4 beträgt bis zu ca. 0,01 μm.

## Patentansprüche

1. Mehrschichtige magnetische Dünnfilmplatte mit Aluminium oder einer Aluminiumlegierung, insbesondere $AlMg_5$, als Material für den Träger (1), einer darauf befindlichen dünnen Kunstharzschicht (2) und darüber befindlicher metallischer Magnetschicht (3), dadurch gekennzeichnet, dass Poren (4) in der Kunstharzschicht (2) durch an ihrem Boden angeordnetes Aluminiumoxid (5) passiviert sind.

2. Verfahren zur Herstellung der magnetischen Dünnfilmplatte gemäss Anspruch 1, dadurch gekennzeichnet, dass die Passivierung der Poren (4) der Kunstharzschicht (2) durch anodische Oxydation des Aluminiums des Trägers (1) erfolgt.

3. Verfahren nach Anspruch 2, dadurch gekennzeichnet, dass der mit der Kunstharzschicht (2) versehene Träger (1) in einem Elektrolysebad an eine elektrische Spannung von bis zu 20 Volt angelegt wird.

4. Verfahren nach Anspruch 3, dadurch gekennzeichnet, dass die Anodisierungsdauer im Elektrolysebad zwischen 2 und 20 Minuten, vorzugsweise ca. 10 Minuten, und die Temperatur des Elektrolysebades bis zu 80° C, vorzugsweise 20 bis 30 °C, beträgt.

## Revendications

1. Disque magnétique à film mince multicouches où le matériau constituant le support (1) est soit de l'aluminium soit un alliage d'aluminium,

en particulier AlMg$_5$, sur lequel est appliquée une couche mince de résine synthétique (2), laquelle est recouverte d'une couche métallique magnétique (3), caractérisé en ce que les trous (4) dans ladite couche de résine synthétique (2) sont passivés au moyen d'alumine (5) se trouvant dans leur fond.

2. Procédé de fabrication dudit disque magnétique à film mince selon la revendication 1, caractérisé en ce que la passivation des trous (4) de ladite couche de résine synthétique (2) est réalisée par oxydation anodique de l'aluminium dudit support (1).

3. Procédé selon la revendication 2, caractérisé en ce que ledit support (1) revêtu de ladite couche de résine synthétique (2) subit dans un bain électrolytique une tension électrique d'au plus 20 V.

4. Procédé selon la revendication 3, caractérisé en ce que l'opération d'anodisation dans le bain électrolytique dure entre 2 et 20 minutes, de préférence environ 10 minutes, et que la température du bain s'élève au plus à 80°C, mais qu'elle est de préférence comprise entre 20 et 30°C.

**Claims**

1. Multi-layer magnetic thin-film disk with aluminium or an aluminium alloy, in particular AlMg$_5$, as a material for the substrate (1), followed by a thin synthetic resin layer (2) and an overlying metallic magnetic layer (3), characterized in that the pin holes (4) in the synthetic resin layer (2) are passivated by aluminium oxide (5) located at their base.

2. Method of manufacturing the magnetic thin-film disk according to claim 1, characterized in that passivation of the pin holes (4) in the synthetic resin layer (2) is effected by anodically oxidizing the aluminium of substrate (1).

3. Method according to claim 2, characterized in that substrate (1) provided with the synthetic resin layer (2) is subjected in an electrolytic bath to an electric voltage of up to 20 V.

4. Method according to claim 3, characterized in that the duration of anodization in the electrolytic bath is between 2 and 20 minutes, preferably about 10 minutes, and the temperature of the electrolytic bath is up to 80°C, preferably 20 to 30°C.

# FIG. 1

# FIG. 2

$S = 1\,mA/cm^2$